# EUROPEAN PATENT SPECIFICATION

(11) **EP 1 916 434 B1**
(45) Date of publication and mention of the grant of the patent: **09.11.2011**
(21) Application number: 07116115.2
(22) Date of filing: 11.09.2007
(51) Int. Cl.: F16D 13/52

(54) **Multiplate clutch system**
Multiplatten-Kupplungssystem
Système d'embrayage multidisque

(30) Priority: 25.10.2006 JP 2006290066
(43) Date of publication of application: 30.04.2008
(73) Proprietor: Honda Motor Co., Ltd., Tokyo 107-8556 (JP)
(72) Inventor: Yoshinaga, Kei, Saitama 351-0193 (JP); Takahashi, Isamu, Saitama 351-0193 (JP); Akutsu, Toshiharu, Saitama 351-0193 (JP); Yamamoto, Kazumitsu, Saitama 351-0193 (JP); Nagahashi, Yoshiki, Saitama 351-0193 (JP)
(74) Representative: Rupp, Christian

(56) References cited:
- JP-A- 2005 308 092
- JP-A- 2005 325 993

## Description

The present invention relates to a multiplate clutch system that transmits or discontinues the transmission of the drive power from an input member, and, in particular, relates to a multiplate clutch system equipped with a cam mechanism that suppresses reverse drive power from acting, from the output member, on the input-member side.

A conventionally-known multiplate clutch system has a protruding cam and a recessed cam formed respectively in a pressure plate and in a clutch outer. Each of the cams has a contact face inclined towards the rotational direction. In the multiplate clutch system, the clutch capacity is increased or decreased by the torque fluctuations caused by drive power from the crankshaft and reverse drive power from the wheel side (see Japanese Patent Application Laid-Open No. 2005-325993).

In the multiplate clutch system disclosed in Patent Document 1, the cam faces of the protruding cam and the recessed cam each of which is formed in a plane shape are brought into a face contact with each other. By use of the inclined angle, and variation in rotation between an output-shaft side and an input-shaft side, the clutch plates are pressure-contacted with each other or moved away from each other to make the clutch capacity variable. However, in a case where a plurality of cam faces are formed in the circumferential direction, variation in processing accuracy causes changes of the point and its area of the contact between cams. For the purpose of maintaining the variable characteristics constant, a machining center with a high processing accuracy and a production management system with a rigidly-set post-processing management standard are required. As a result, it is difficult to reduce the manufacturing cost and to improve the productivity. In addition, the configuration depends mainly on face contacts, so that the friction contributes heavily to the operation of the cams. Accordingly, when ideal operational characteristics are set, in addition to the setting of the cam angles, friction under various conditions has to be taken into consideration.

Patent document JP 2005-308092 shows a multi-plate type clutch device having a back torque limiter comprising a protrusion which is provided on the side of a clutch center such as to protrude on the side of a center boss, a cam groove having a bottom surface which is sloped so as to move a clutch center to the side away from the center boss during the exertion of the reverse torque by the output member which is provided on the side of the center boss and a snapping member which snap-biases the clutch center to the side close to the center boss, and at least the width direction center of the bottom surface of the cam groove is formed as a flat surface located along the flat surface perpendicular to the rotation axis of the output member.

The present invention is made under such circumstances. An object of the invention is providing a multiplate clutch system that maintains constant variable characteristics of the clutch capacity even when there is a variation in processing accuracy at the time of the production. The multiplate clutch system, in addition, is produced with a lower production cost and with higher productivity.

To accomplish the above-mentioned object, a first aspect of the present invention provides a multiplate clutch system with the following characteristics. The multiple clutch system includes a clutch outer, joined to an input member; a center boss, fixed to an output member. Also included are a plurality of first clutch plates engaged with the clutch outer so as not to rotate relatively to the clutch outer, and a plurality of second clutch plates arranged alternately with the first clutch plates in the axial direction. The multiplate clutch system also includes a clutch center with which the second clutch plates are engaged so as not to rotate relatively to the clutch center, and a pressure plate that holds, in the axial direction, the first clutch plates and the second clutch plates in the interstice formed between the pressure plate and the center boss. In addition, the multiplate clutch system includes a clutch spring that biases the pressure plate to a side so as to press to contact the first clutch plates and the second clutch plates with each other. Moreover, the multiplate clutch system includes a cam mechanism that is provided between the center boss and the clutch center. The cam mechanism transmits the drive power of the input member from the clutch center to the center boss. The cam mechanism pushes the pressure plate, with a clutch center interposed in between, to a side so as to make the pressure plate move away from the center boss against the biasing force of the clutch spring when reverse drive power is applied from the output member. The cam mechanism, furthermore, includes a protruding cam and a recessed cam. Each of the protruding cam and the recessed cam has a first inclined face and a second inclined face, which are inclined in the same direction with respect to the circumferential direction. The protruding cam is brought into a point contact with the recessed cam. Among the first and the second inclined faces, the inclined faces on a side for increasing the clutch capacity are brought into a point contact with each other.

A second aspect of the present invention has the following characteristics in addition to the configuration of the first aspect of the present invention. At least one of the first and the second inclined faces of the protruding cam is formed into a curved surface in the axial direction. At least one of the first and the second inclined faces of the recessed cam is formed into a curved surface in the radial direction.

A third aspect of the present invention has the following characteristics in addition to the configuration of the second aspect of the present invention. The protruding cam and the recessed cam are formed as projections. The curvature of the curved surface of each of the protruding cam and the recessed cam is approximately ten times as large as the width of the corresponding one of the protrude cam and of the recessed cam.

A fourth aspect of the present invention has the following characteristics in addition to the configuration of the third aspect of the present invention. A plurality of the recessed cams are formed. At least an end side, in the radial direction, of each of the recessed cams is made to be opened.

According to the multiplate clutch system of the first aspect of the present invention, the cam mechanism includes the protruding cam and the recessed cam. Each of the protruding cam and the recessed cam has the first inclined face and the second inclined face, which are inclined in the same direction with respect to the circumferential direction. The protruding cam is brought into a point contact with the recessed portion. Consequently, even when there is a variation in processing accuracy between the protruding cam and the recessed cam, the contact area between the protruding cam and the recessed cam is prevented from changing. As a result, while the system maintains constant variable characteristics of the clutch capacity, the manufacturing cost of the system can be lowered and an improvement in productivity can be achieved.

Moreover, among the first and the second inclined faces, the inclined faces on the side for increasing the clutch capacity are brought into a point contact with each other. Consequently, the inclined faces on the side for decreasing the clutch capacity do not have to be formed by machining processing. As a result, the system can be manufactured at a reduced cost.

According to the multiplate clutch system of the second aspect of the present invention, at least one of the first and the second inclined faces of the protruding cam is formed into a curved surface in the axial direction. At least one of the first and the second inclined faces of the recessed cam is formed into a curved surface in the radial direction. Consequently, a point contact is accomplished when the curved surface of each of the first and the second inclined faces of the protruding cam is arranged in a direction orthogonal to the curved surface of the corresponding one of the first and the second inclined faces. As a result, an improvement in machinability and in productivity is accomplished in comparison to the case where the first and the second inclined faces are processed into spherical surfaces.

According to the multiplate clutch system of the third aspect of the present invention, the protruding cam and the recessed cam are formed as projections. The curvature of the curved surface of each of the protruding cam and the recessed cam is approximately ten times as large as the width of the corresponding one of the protrude cam and of the recessed cam. Consequently the wall thickness of the parts, except for the protruding cam and the recessed cam, can be made smaller. As a result, the system can be made lighter in weight.

According to the multiplate clutch system of the fourth aspect of the present invention, the plurality of the recessed cams are formed. At least an end side, in the radial direction, of each of the recessed cams is made to be opened. Consequently, when the plurality of recessed cams are formed by machining processing, the plurality of recessed cams can be processed consecutively without lifting up the machining center after the first one of the recessed cams is formed. In this way, the processing speed is enhanced, and thus the productivity is improved.
Fig. 1 is a partially-cutout cross-sectional view for describing an embodiment of a multiplate clutch system according to the present invention.
Fig. 2 is a cross-sectional view taken along the line A-A in Fig. 1 and viewed as the arrow indicates..
Fig. 3 is a cross-sectional view taken along the line B-B and viewed as the arrows indicate.
Fig. 4 is a view showing a center boss. Fig. 4(a) is a vertical cross-sectional view. Fig. 4(b) is a view showing a cam member in Fig. 4(a) viewed as the arrow G indicates.
Fig. 5 is a partially-cutout cross-sectional view for describing a modified embodiment of the embodiment of a multiplate clutch system according to the present invention.

Hereinbelow, an embodiment of the multiplate clutch system according to the present invention will be described in detail by use of the accompanying drawings. Note that the letters of reference numerals indicates the directions in each drawing.

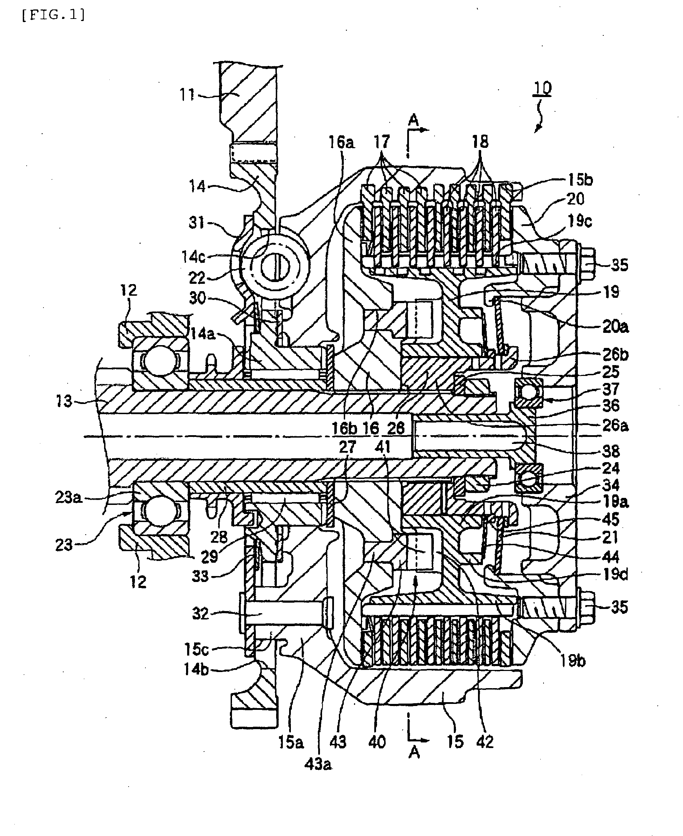

To begin with, Fig. 1 shows how the drive power outputted from an unillustrated crankshaft is transmitted to a main shaft 13, via a drive gear 11, driven gear 14, and a multiplate clutch system 10. The drive gear 11 is provided on the unillustrated crankshaft. The driven gear 14, which meshes with the drive gear 11, is rotatably supported by the main shaft 13 of the transmission while the main shaft 13 is rotatably supported by a crankcase 12. The multiplate clutch system 10 of this embodiment is provided between the driven gear 14 and the main shaft 13.

As shown in Fig. 1, the multiplate clutch system 10 of this embodiment includes a clutch outer 15. The clutch outer 15 is joined to the driven gear 14, which is an input member. The multiplate clutch system 10 also includes a center boss 16 fixed to the main shaft 13, which is an output member. Also included are: a plurality of first clutch plates 17, and a plurality of second clutch plates 18, which alternate with the first clutch plates 17 in the axial direction. In addition, the multiplate clutch system 10 includes a clutch center 19, a pressure plate 20, a clutch spring 21, and a cam mechanism 40 . The first clutch plates 17 are engaged with the clutch outer 15, but are not allowed to rotate relatively to the clutch outer 15. The second clutch plates 18 are engaged with the clutch center 19, but not allowed to rotate relatively to the clutch center 19. The first clutch plates 17 and the second clutch plates 18 are held by and between the center boss 16 and the pressure plate 20 in the axial direction. The clutch spring 21 biases the pressure plate 20 to a side so as to pressure-contact the first clutch plates 17 and the second clutch plates 18 with each other. The cam mechanism 40 is provided between the center boss 16 and the clutch center 19.

A ball bearing 23 is set between the main shaft 13 and the crankcase 12, and has an inner ring 23a. A nut 24 is screwed onto a first end of the main shaft 13. A first spacer 25, a boss 26a of an support tube 26, the inner peripheral portion of the center boss 16, a second spacer 27, a sleeve 28, which has a cylindrical shape and coaxially surrounds the main shaft 13, are held by and between the inner ring 23a and the nut 24, in the order from the nut 24 side. The inner peripheral portion of the center boss 16 and the boss 26a of the support tube 26 are splined to fit onto the main shaft 13. Accordingly, the center boss 16 and the support tube 26 are coupled onto the main shaft 13 and are not allowed to rotate relatively to the main shaft 13. A slight clearance is provided between the main shaft 13 and the support tube 26, and so is between the support tube 26 and the clutch center 19. In addition, a boss 14a of the driven gear 14 is rotatably supported with a needle bearing 29 provided onto the outer circumference of the sleeve 28.

The clutch outer 15, made of aluminum, is formed into a cylinder with a base, which is an end wall 15a, provided at the driven-gear 14 side. A ring-shaped slide plate 30 is set between the end wall 15a and the driven gear 14. In addition, engagement grooves 15b are formed in the inner circumferential surface of the clutch outer 15 substantially at regular intervals in the axial direction. The plurality of first clutch plates 17 are engaged with the clutch outer 15 by use of these engagement grooves 15b.

Joint bosses 15c protrude from the end wall 15a of the clutch outer 15 at a plurality of positions in the circumferential direction. A plurality of long holes 14b are formed in the driven gear 14. Each long hole 14b stretches along the circumferential direction while the long holes 14b are arranged also along the circumferential direction at intervals. The joint bosses 15c are inserted into the respective long holes 14b. In addition, a holding plate 31 is brought into contact with the end face of each of the joint bosses 15c of the clutch outer 15. The holding plate 31 faces a side surface of the driven gear 14, which side surface is located on the opposite side of the driven gear 14 from the end wall 15a. Rivets 32, which penetrate the respective joint bosses 15c, are used to fix the holding plate 31 to the joint bosses 15c. In addition, a dish spring 33 is provided between the holding plate 31 and the driven gear 14 so as to bias the driven gear 14 and the end wall 15a towards the respective surfaces of the slide plate 30.

In addition, a plurality of holding holes 14c are formed in the driven gear 14. Each holding hole 14c stretches along the circumferential direction, and the holding holes 14c are arranged at positions that are offset, in the circumferential direction, from the locations of the plurality of long holes 14b. Damper springs 22, which are set between the driven gear 14 and the clutch outer 15, are accommodated in respective holding holes 14c.

The center boss 16 is made of aluminum, and is formed in a ring shape provided with a pressure-receiving plate portion 16a in the outer peripheral portions.

The clutch center 19 is made of an SCM carburized steel, and has an inner cylindrical portion 19a and an outer cylindrical portion 19b. The inner cylindrical portion 19a is slidably fitted onto the support tube 26. The outer cylindrical portion 19b is placed between the center boss 16 and the pressure plate 20. A plurality of engagement grooves 19c are formed, at substantially regular intervals in the axial direction, in the outer circumferential surface of the outer cylindrical portion 19b. The plurality of second clutch plates 18 are engaged with the engagement grooves 19c.

The pressure plate 20 is made of aluminum, and is formed in a ring shape so as to be engaged the outer cylindrical portion 19b of the clutch center 19 while the relative rotation of the pressure plate 20 to the clutch center 19 is not allowed. The clutch spring 21 is a diaphragm spring. The two ends of the clutch spring 21 are engaged with the interstice between brim portions 20a and 26b. The brim portion 20a is formed in the clutch-center 19 side end portion of the inner periphery of the pressure plate 20. The brim portion 26b is formed in the pressure-plate 20 side end portion of the support tube 26. With the biasing force of the clutch spring 21, the pressure plate 20 presses the clutch center 19, and thus the first and the second clutch plates 17, 18, which alternately disposed, are biased towards the pressure-receiving plate portion 16a of the center boss 16. In other words, the multiplate clutch system 10 is always biased by the clutch spring 21, so that the clutch can be in an engaging state.

The outer peripheral portion of a lifter plate 34 is joined to the pressure plate 20 with a plurality of bolts 35. The inner peripheral portion of the lifter plate 34, on the other hand, is rotatably supported by a lifter piece 36 with a release bearing 37 placed in between. The cylindrical lifter piece 36 is slidably fitted onto a first end portion of the cylindrical main shaft 13. Inside the main shaft 13, a lifter shaft 38 is inserted. An operation of an unillustrated clutch operation member moves the lifter shaft 38 forward or backward in the axial direction. The lifter piece 36 is contiguously joined to an end of the lifter shaft 38.

A rightward movement in Fig. 1 of the lifter shaft 38 moves the lifter plate 34 to a side so as to make the lifter plate 34 move away from the clutch center 19 against the biasing force of the clutch spring 21. Accordingly, the frictional engagement between the first and the second clutch plates 17 and 18 is released. As a result, the transmission of the drive power between the clutch outer 15 and the main shaft 13 is discontinued.

The drive force from the driven gear 14 is transmitted by the cam mechanism 40 from the clutch center 19 to the center boss 16. When reverse drive power is applied from the main shaft 13, the cam mechanism 40 pushes, with the clutch center 19 in-between, the pressure plate 20 against the biasing force of the clutch spring 21, to a side so as to make the pressure plate 20 move away from the center boss 16. As Fig. 1 to Fig. 3 show, the cam mechanism 40 includes three protruding cams 41, three recessed cams 42, and a diaphragm spring 44. The protruding cams 41 are formed in the center boss 16 so as to protrude to the clutch-center 19 side. The recessed cams 42 are formed in the clutch center 19 so as to protrude to the center-boss 16 side. Each protruding boss 41 is inserted into the corresponding one of the recessed cams 42. The diaphragm spring 44 biases the clutch center 19 to a side so as to make the clutch center 19 approach the center boss 16. In this embodiment, the protruding cams 41 are formed integrally with a cam member 43, which is attached to the center boss 16. The recessed cams 42 are formed integrally with the clutch center 19.

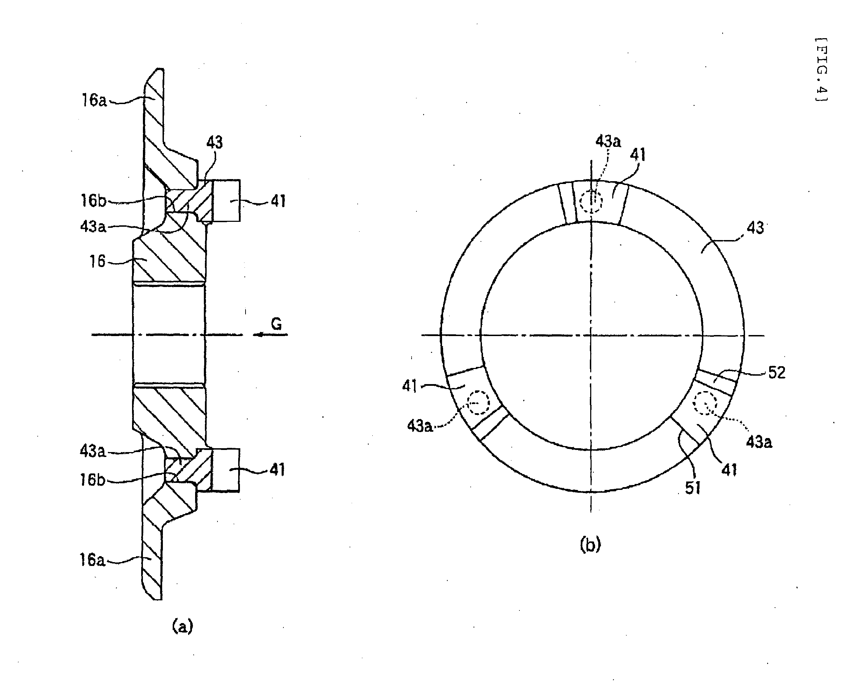

The cam member 43 is made of an SCM carburized steel, and is formed into a ring shape as Fig. 4 shows. A plurality of fitting protruding portions 43a protrude from the cam member 43 at a plurality of positions along the circumferential direction. By press-fitting each filling protruding portion 43a into corresponding one of a plurality of fitting holes 16b, which are formed in the center boss 16, the cam member 43 gets attached to the center boss 16. In addition, the protruding cams 41 are formed, at regular intervals, in the clutch-center 19 side surface of the cam member 43, which is to be attached to the center boss 16.

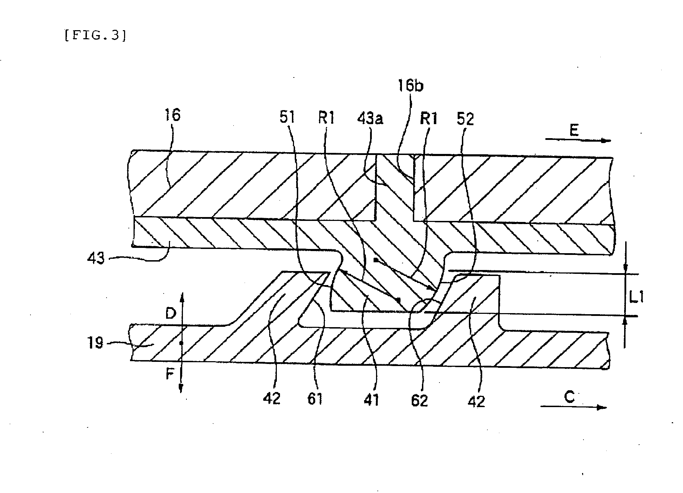

Moreover, as Fig. 3 shows, in the outer end surface in the circumferential direction, of each protruding cam 41, a first inclined face 51 and a second inclined face 52 are formed. The faces 51 and 52 are inclined to the same direction with respect to the circumferential direction. On the one hand, the first inclined face 51 is engaged with corresponding one of the recessed cams 42 so as to make the clutch center 19 move towards the center-boss 16 side and thus to increase the clutch capacity when the drive force from the driven gear 14 is applied. On the other hand, the second inclined face 52 is brought into contact with corresponding one of the recessed cams 42 when reverse drive power from the main shaft 13 is applied. In this case, the clutch center 19 moves to a side so as to make the clutch center 19 move away from the center boss 16 and thus to decrease the clutch capacity.

In addition, as Fig. 3 shows, the first and the second inclined faces 51 and 52 of each protruding cam 41 are formed into curved surfaces in the axial direction. The curvature R1 of the curved surface of each of the first and the second inclined faces 51, 52 is set at approximately ten times as large as the width L1, in the axial direction, of each protruding cam 41. For example, if L1 = 5.6 mm, then R1 = 50 mm. Incidentally, the first and the second inclined faces 51, 52 of each protruding cam 41 are formed by a polygon turning in which a workpiece and a rotating tool are rotated in the same direction on respective axes that are parallel to each other, and thus the rotating tool intermittently cuts the workpiece.

Here, when the curvature R1 of each of the first and the second inclined faces 51, 52 is smaller than approximately ten times as large as the width L1, in the axial direction, of each protruding cam 41, the area at the root portion of each protruding cam 41 is excessively small. This results in an insufficient strength. In contrast, when the curvature R1 of each of the first and the second inclined faces 51, 52 is larger than approximately ten times as large as the width L1, in the axial direction, of each protruding cam 41, the contact point of one of the protruding cam 41, formed even within the variation in machining accuracy, with the corresponding recessed cam 42 becomes significantly off the center of the cam face. As a result, fluctuations may possibly occur in the way how the force is received.

Moreover, as Fig. 3 shows, in the inner end surface in the circumferential direction, of each recessed cam 42, a first inclined face 61 and a second inclined face 62 are formed. The faces 61 and 62 are inclined to the same direction with respect to the circumferential direction. The first inclined face 61 is engaged with the first inclined face 51 of the corresponding one of the protruding cams 41 so as to make the clutch center 19 move towards the center-boss 16 side and thus to increase the clutch capacity when the drive force from the driven gear 14 is applied. On the other hand, the second inclined face 62 is brought into contact with the second inclined face 52 of the corresponding one of the protruding cams 41 when reverse drive power from the main shaft 13 is applied. In this case, the clutch center 19 moves to a side away from the center boss 16 and thus to decrease the clutch capacity. Incidentally, the outer end side in the radial direction of each recessed cam 42 is made open. Though, as has just been described, each of the recessed cams 42 of this embodiment has an open side formed on the outer end side in the radial direction, the open side may be formed on the inner end side in the radial direction, or may be formed on the sides of the two ends in the radial direction.

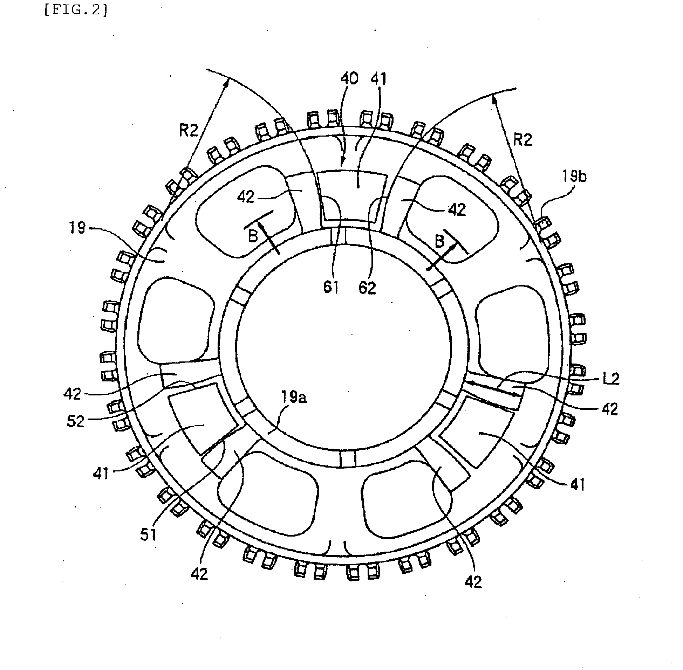

In addition, as Fig. 2 shows, the first and the second inclined faces 61 and 62 of each recessed cam 41 are formed into curved surfaces in the radial direction. The curvature R2 of the curved surface of each of the first and the second inclined faces 61, 62 is set at approximately ten times as large as the width L2, in the radial direction, of the recessed cam 42. For example, if L2 = 14 mm, then R2 = 150 mm. Incidentally, the first and the second inclined faces 61, 62 of each recessed cam 42 are formed by NC machining in which the movements of a cutting tool, such as a drill, and of a workpiece are controlled and operated using their coordinate values, and thus the cutting tool is made to cut the workpiece.

Here, when the curvature R2 of each of the first and the second inclined faces 61, 62 is smaller than approximately ten times as large as the width L2, in the radial direction, of each recessed cam 42, the area at the root portion of each recessed cam 42 is excessively small. This results in an insufficient strength. In contrast, when the curvature R2 of each of the first and the second inclined faces 61, 62 is approximately ten times larger than the width L2, in the radial direction, of each recessed cam 42, the contact point of one of the recessed cams 42, formed even within the variation in machining accuracy, with the corresponding protruding cam 41 becomes significantly off the center of the cam face. As a result, fluctuations may possibly occur in the way how the force is received.

In addition, a cylindrical portion 19d is formed in the clutch center 19 at a position between the inner cylindrical portion 19a and the outer cylindrical portion 19b so as to protrude to the side of the pressure plate 20. A first end of the diaphragm spring 44 is brought into contact with the outer end portion of this cylindrical portion 19d. A second end of the diaphragm spring 44 is engaged with a stopper ring 45 attached to the outer circumference of the support tube 26. By the biasing force of the diaphragm spring 44, the clutch center 19 is pushed to the center-boss 16 side, and thus each of the protruding cams 41 is securely inserted into the corresponding one of the recessed cams 42.

In the multiplate clutch system 10 with the above-described structure, when the drive power from the driven gear 14 makes the clutch center 19 rotate in the direction that the arrow C indicates (see Fig. 3), the first inclined face 51 of the protruding cam 41 is engaged with the first inclined face 61 of the recessed cam 42 with a point contact. Thus, the clutch center 19 is moved to the side of the center boss 16 (to the direction that the arrow D indicates in Fig. 3). In this event, the frictional engaging force between the first clutch plates 17 and the second clutch plates 18 is increased. As a result, the drive power acting on the clutch center 19 is efficiently transmitted to the center boss 16.

In contrast, when the reverse drive power from the main shaft 13 makes the center boss 16 rotate in the direction that the arrow E indicates (see Fig. 3), the second inclined face 52 of the protruding cam 41 is brought into a point contact with the second inclined face 62 of the recessed cam 42. Thus, the clutch center 19 is moved to the side away from the center boss 16 (to the direction that the arrow F indicates in Fig. 3). In this event, the frictional engaging force between the first clutch plates 17 and the second clutch plates 18 is decreased. As a result, the reverse drive power acting on the clutch center 19 is effectively suppressed.

Moreover, in this embodiment, when the first inclined face 51 of the protruding cam 41 is engaged with the first inclined face 61 of the recessed cam 42, the first inclined face 51 is brought into a point contact with the first inclined face 61. When the second inclined face 52 of the protruding cam 41 is brought into contact with the second inclined face 62 of the recessed cam 42, the second inclined face 52 is brought into a point contact with the second inclined face 62. Consequently, the system 10 maintains constant variable characteristics of the clutch capacity even when there is a variation in processing accuracy between the protruding cam 41 and the recessed cam 42. This is because, even with the variation in the processing accuracy, the contact area between the protruding cam 41 and the recessed cam 42 does not vary. In addition, variation in processing accuracy is permitted when the protruding cam 41 and the recessed cam 42 are subjected to machining. Consequently, neither machining center with a high processing accuracy nor production management system with a rigidly set post-machining management standard is necessary. As a result, the production cost of the system 10 can be lowered.

As has been described thus far, according to the multiplate clutch system 10 of this embodiment, the cam mechanism 40 includes the protruding cam 41 and the recessed cam 42. The protruding cam 41 and the recessed cam 42 have the respective first inclined faces 51 and 61, both of which are inclined in the same direction with respect to the circumferential direction, and have the respective second inclined faces 52 and 62, both of which are inclined also in the same direction with respect to the circumferential direction. In addition, the protruding cam 41 is brought into a point contact with the recessed cam 42. Consequently, even when there is a variation in processing accuracy between the protruding cam 41 and the recessed cam 42, the contact area between the protruding cam 41 and the recessed cam 42 is prevented from changing. As a result, while the system 10 maintains constant variable characteristics of the clutch capacity, the manufacturing cost of the system 10 can be lowered and an improvement in productivity can be achieved.

In addition, according to the multiplate clutch system 10 of this embodiment, each of the first and the second inclined faces 51 and 52 of the protruding cam 41 forms a curved surface in the axial direction while each of the first and the second inclined faces 61 and 62 of the recessed cam 42 forms a curved surface in the radial direction. Consequently, a point contact is accomplished when the curved surface of each of the first and the second inclined faces 51 and 52 of the protruding cam 41 is arranged in a direction orthogonal to the curved surface of the corresponding one of the first and the second inclined faces 61 and 62 of the recessed cam 42. As a result, an improvement in machinability and in productivity is accomplished in comparison to the case where the first and the second inclined faces 51, 52, 61, and 62 are processed into spherical surfaces.

Moreover, according to the multiplate clutch system 10 of this embodiment, the protruding cams 41 and the recessed cams 42 are formed as projections, and the curved surface of each of the first and the second inclined faces 51, 52, 61, 62 of the protruding cams 41 and of the recessed cams 42 is made to have a curvature approximately ten times as large as the width of the corresponding one of the protruding cams 41 and the recessed cams 42. Consequently, the wall thickness of the cam member 43 except for the protruding cams 41 and the wall thickness of the clutch center 19 except for the recessed cams 42 can be made smaller. As a result, the system 10 is made lighter in weight.

Still moreover, according to the multiplate clutch system 10 of this embodiment, the plurality of recessed cams 42 are formed, and the outer end side in the radial direction of each of the recessed cams 42 is made to open. Consequently, when the plurality of recessed cams 42 are formed by machining processing, the plurality of recessed cams 42 can be processed consecutively without lifting up the machining center after the first one of the recessed cams 42 is formed. In this way, the processing speed is enhanced, and thus the productivity is improved.

Furthermore, according to the multiplate clutch system 10 of this embodiment, the protruding cams 41 of the cam member 43 are formed by a polygon turning. Consequently, the protruding cams 41 can be formed, with ease, in the cam member 43, and thus the productivity is improved.

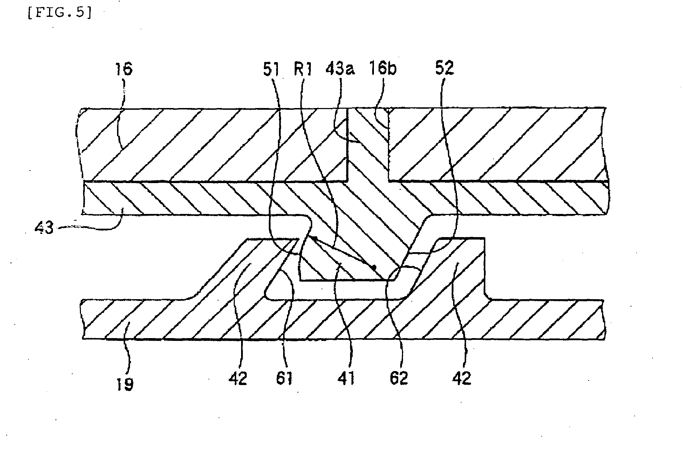

Incidentally, Fig. 5 shows a modified embodiment of this embodiment, which may be configured as follows. The first inclined faces 51 and 61 of the protruding cams 41 and of the recessed cams 42 (the inclined faces of the side for increasing the clutch capacity) are formed into curved surfaces. Thus, each of the protruding cams 41 is brought into a point contact with the corresponding one of the recessed cams 42. Meanwhile, the second inclined faces 52 and 62 of the protruding cams 41 and of the recessed cams 42 (the inclined faces of the side for decreasing the clutch capacity) are formed into flat surfaces. Thus, each of the protruding cams 41 is brought into a face contact with the corresponding one of the recessed cams 42. In this case, the second inclined faces can be formed by forging, and thus the man-hour needed for the machining processing can be reduced. As a result, the system 10 can be manufactured with a lower cost. Note that, in this modified embodiment, both of the second inclined faces 52 and 62 of the protruding cams 41 and of the recessed cams 42 are formed into flat surfaces, but any one of the second inclined faces 52 and 62 may be formed into flat surfaces.

It should be noted that the present invention is not limited to the embodiments described above. Various modifications, improvements can be made when necessary.

For example, in this embodiment, each of the first and the second inclined faces 51 and 52 of the protruding cams 41 forms a curved surface in the axial direction while each of the first and the second inclined faces 61 and 62 of the recessed cams 42 forms a curved surface in the radial direction. The present invention is not limited to this structure. Each of the first and the second inclined faces 51 and 52 of the protruding cams 41 forms a curved surface in the radial direction while each of the first and the second inclined faces 61 and 62 of the recessed cams 42 forms a curved surface in the axial direction.

In addition, in this embodiment, the protruding cams 41 are formed in the center boss 16 while the recessed cams 42 are formed in the clutch center 19. The present invention is not limited to this structure. The recessed cams 42 are formed in the center boss 19 while the protruding cams 41 are formed in the clutch center 19.

Moreover, in this embodiment, three of the protruding cams 41 are formed in the center boss 16 while three of the recessed cams 42 are formed in the clutch center 19. The respective numbers of the protruding cams 41 and of the recessed cams 42 are not limited to any particular number, and any arbitrarily chosen numbers respectively of the protruding cams 41 and of the recessed cams 42 can be formed.
- 10: MULTIPLATE CLUTCH SYSTEM
- 11: DRIVE GEAR
- 12: CRANKCASE
- 13: MAINSHAFT (OUTPUT MEMBER)
- 14: DRIVEN GEAR (INPUT MEMBER)
- 15: CLUTCH OUTER
- 16: CENTER BOSS
- 17: FIRST CLUTCH PLATES
- 18: SECOND CLUTCH PLATES
- 19: CLUTCH CENTER
- 20: PRESSURE PLATE
- 21: CLUTCH SPRING
- 40: CAM MECHANISM
- 41: PROTRUDING CAM
- 51, 61: FIRST INCLINED FACE (INCLINED FACE ON THE SIDE FOR INCREASING THE CLUTCH CAPACITY)
- 52, 62: SECOND INCLINED FACE (INCLINED FACE ON THE SIDE FOR DECREASING THE CLUTCH CAPACITY)
- 42: RECESSED CAM
- 43: CAM MEMBER

## Claims

1. A multiplate clutch system (10) comprising:
a clutch outer (15), joined to an input member (14);
a center boss (16), fixed to an output member (13);
a plurality of first clutch plates (17) engaged with the clutch outer (15) so as not to rotate relatively to the clutch outer (15);
a plurality of second clutch plates (18) arranged alternately with the first clutch plates (17) in the axial direction;
a clutch center (19) with which the second clutch plates (18) are engaged so as not to rotate relatively to the clutch center (19);
a pressure plate (20) that holds, in the axial direction, the first clutch plates (17) and the second clutch plates (18) in the interstice formed between the pressure plate (20) and the center boss (16);
a clutch spring (21) that biases the pressure plate (20) to a side so as to pressure-contact the first clutch plates (17) and the second clutch plates (18) with each other; and
a cam mechanism (40) that is provided between the center boss (16) and the clutch center (19), and which transmits the drive power of the input member (14) from the clutch center (19) to the center boss (16), and which pushes the pressure plate (20), with a clutch center (19) interposed in between, to a side so as to make the pressure plate (20) move away from the center boss (16) against the biasing force of the clutch spring (21) when reverse drive power is applied from the output member (13),
wherein the cam mechanism (40) includes a protruding cam (41) and a recessed cam (42),
each of the protruding cam (41) and the recessed cam (42) has a first inclined face (51, 61) and a second inclined face (52, 62), which are inclined in the same direction with respect to the circumferential direction, and
the protruding cam (41) is brought into a point contact with the recessed cam (42) **characterized in that**,
among the first and the second inclined faces (51, 52, 61, 62), the inclined faces (51, 61) on a side for increasing the clutch capacity are brought into a point contact with each other.

2. The multiplate clutch system (10) according to claim 1,
wherein at least one of the first and the second inclined faces (51, 52) of the protruding cam (41) is formed into a curved surface in the axial direction, and
at least one of the first and the second inclined faces (61, 62) of the recessed cam (42) is formed into a curved surface in the radial direction.

3. The multiplate clutch system (10) according to claim 1 or 2,
wherein the protruding cam (41) and the recessed cam (42) are formed as projections, and
the curvature of the curved surface of each of the protruding cam (41) and the recessed cam (42) is approximately ten times as large as the width of the corresponding one of the protruding cam (41) and of the recessed cam (42).

4. The multiplate clutch system (10) according to any of the preceding claims, wherein
a plurality of the recessed cams (42) are formed, and
at least an end side, in the radial direction, of each of the recessed cams (42) is made to be opened.

## Patentansprüche

1. Mehrscheibenkupplungssystem (10), das aufweist:
ein Kupplungsäußeres (15), das mit einem Eingangselement (14) verbunden ist;
eine Mittelnabe (16), die an einem Ausgangselement (13) befestigt ist;
mehrere erste Kupplungsscheiben (17), die mit dem Kupplungsäußeren (15) in Eingriff sind, so dass sie sich relativ zu dem Kupplungsäußeren (15) nicht drehen;
mehrere zweite Kupplungsscheiben (18), die in der Axialrichtung abwechselnd mit den ersten Kupplungsscheiben (17) angeordnet sind;
eine Kupplungsmitte (19), mit der die zweiten Kupplungsscheiben (18) in Eingriff sind, um sich nicht relativ zu der Kupplungsmitte (19) zu drehen;
eine Druckplatte (20), die die ersten Kupplungsscheiben (17) und die zweiten Kupplungsscheiben (18) in dem Zwischenraum, der zwischen der Druckplatte (20) und der Mittelnabe (16) gebildet wird, in der Axialrichtung hält;
eine Kupplungsfeder (21), die die Druckplatte (20) auf eine Seite vorspannt, um die ersten Kupplungsscheiben (17) und die zweiten Kupplungsscheiben (18) in Druckkontakt miteinander zu halten; und
einen Nockenmechanismus (40), der zwischen der Mittelnabe (16) und der Kupplungsmitte (19) bereitgestellt ist und der die Antriebskraft des Eingangselements (14) von der Kupplungsmitte (19) auf die Mittelnabe (16) überträgt und der die Druckplatte (20) mit einer dazwischen eingeschobenen Kupplungsmitte (19) auf eine Seite drückt, um die Druckplatte (20) gegen die Vorspannkraft der Kupplungsfeder (21) dazu zu bringen, sich von der Mittelnabe (16) weg zu bewegen, wenn von dem Ausgangselement (13) die umgekehrte Antriebskraft angewendet wird,
wobei der Nockenmechanismus (40) eine vorstehende Nocke (41) und eine vertiefte Nocke (42) aufweist,
die vorstehende Nocke (41) und die vertiefte Nocke (42) jeweils eine erste geneigte Fläche (51, 61) und eine zweite geneigte Fläche (52, 62) haben, die in Bezug auf die Umfangsrichtung in die gleiche Richtung geneigt sind, und die vorstehende Nocke (41) in einen Punktkontakt mit der vertieften Nocke (42) gebracht wird, **dadurch gekennzeichnet, dass**
unter den ersten und zweiten geneigten Flächen (51, 52, 61, 62) die geneigten Flächen (51, 61) auf einer Seite zur Erhöhung der Kupplungskapazität in einen Punktkontakt miteinander gebracht werden.

2. Mehrscheibenkupplungssystem (10) nach Anspruch 1,
wobei wenigstens eine der ersten und der zweiten geneigten Flächen (51, 52) der vorstehenden Nocke (41) zu einer in der Axialrichtung gekrümmten Oberfläche ausgebildet ist, und
wenigstens eine der ersten und der zweiten geneigten Flächen (61, 62) der vertieften Nocke (42) zu einer in der Radialrichtung gekrümmten Oberfläche ausgebildet ist.

3. Mehrscheibenkupplungssystem (10) nach Anspruch 1 oder 2,
wobei die vorstehende Nocke (41) und die vertiefte Nocke (42) als Vorsprünge ausgebildet sind, und
der Bogen der gekrümmten Oberfläche der vorstehenden Nocke (41) und der vertieften Nocke (42) jeweils ungefähr zehnmal so groß wie die Breite der entsprechenden der vorstehenden Nocke (41) und der vertieften Nocke (42) ist.

4. Mehrscheibenkupplungssystem (10) nach einem der vorhergehenden Ansprüche, wobei
mehrere der vertieften Nocken (42) ausgebildet sind, und
wenigstens eine Endseite in der Radialrichtung jeder der vertieften Nocken (42) derart gefertigt ist, dass sie geöffnet ist.

## Revendications

1. Système d'embrayage multidisque (10), comprenant :
une partie extérieure d'embrayage (15), reliée à un organe d'entrée (14) ;
un moyeu central (16), fixé à un organe de sortie (13) ;
une pluralité de premiers disques d'embrayage (17), mis en contact avec la partie extérieure d'embrayage (15), de manière à ne pas tourner par rapport à la partie extérieure d'embrayage (15) ;
une pluralité de deuxièmes disques d'embrayage (18), agencés en alternance avec les premières disques d'embrayage (17), en direction axiale ;
une partie centrale d'embrayage (19), avec lequel les deuxièmes disques d'embrayage (18) sont mis en contact, de manière à ne pas tourner par rapport à la partie centrale d'embrayage (19) ;
une plaque de pressage (20) qui maintient, en direction axiale, les premiers disques d'embrayage (17) et les deuxièmes disques d'embrayage (18), dans l'interstice formé entre la plaque de pressage (20) et le moyeu central (16) ;
un ressort d'embrayage (21), qui sollicite la plaque de pressage (20) vers un côté, de manière à produire un contact, accompagné de pression, des premiers disques d'embrayage (17) et des deuxièmes disques d'embrayage (18) les uns avec les autres ; et
un mécanisme à came (40), prévu entre le moyeu central (16) et la partie centrale d'embrayage (19) et qui transmet l'énergie d'entraînement de l'organe d'entrée (14), provenant de la partie centrale d'embrayage (19), au moyeu central (16), et qui pousse la plaque de pressage (20), avec une partie centrale d'embrayage (19) interposée entre eux, vers un côté, de manière à faire que la plaque de pressage (20) s'écarte du moyeu central (16), à l'encontre de la force de sollicitation exercée par le ressort d'embrayage (21), lorsqu'une énergie d'entraînement en sens inverse est appliquée à partir de l'organe de sortie (13),
dans lequel le mécanisme à came (40) comprend une came en relief (41) et une came en creux (42),
chacune, de la came en relief (41) et de la came en creux (42), présente une première face inclinée (51, 61) et une deuxième face inclinée (52, 62), inclinées dans la même direction par rapport à la direction circonférentielle, et
la came en relief (41) est placée en un contact ponctuel avec la came en creux (42), **caractérisé en ce que,**
parmi les première et deuxième faces inclinées (51, 52, 61, 62), les faces inclinées (51, 61) situées sur un côté, pour augmenter la capacité d'embrayage, sont placées en contact ponctuel les unes avec les autres.

2. Système d'embrayage multidisque (10) selon la revendication 1,
dans lequel au moins l'une des première et deuxième faces inclinées (51, 52) de la came en relief (41) est conformée en surface incurvée en direction axiale, et
au moins l'une des première et deuxième faces inclinées (61, 62) de la came en creux (42) est conformée en surface incurvée en direction radiale.

3. Système d'embrayage multidisque (10) selon la revendication 1 ou 2,
dans lequel la came en relief (41) et la came en creux (42) sont conformées en saillies ; et
la courbure de la surface incurvée de chacune de la came en saillie (41) et la came en creux (42) est à peu près de dix fois la valeur de la largeur de l'une correspondante de la came en relief (41) et la came en creux (42).

4. Système d'embrayage multidisque (10) selon l'une quelconque des revendications précédentes, dans lequel
une pluralité de cames en creux (42) sont formées, et
sont ouvertes, en au moins un côté d'extrémité, en direction radiale, de chacune des cames en creux (42).
